# EUROPEAN PATENT APPLICATION

(11) **EP 4 293 089 A1**
(43) Date of publication of application: **20.12.2023**
(21) Application number: 22305864.5
(22) Date of filing: 14.06.2022
(51) Int. Cl.: C09J 153/02, C08L 53/02

(54) **HOT MELT ADHESIVE COMPOSITION**

(71) Applicant: Bostik SA, 92700 Colombes (FR)
(72) Inventor: BELLINI, Clement, 60280 Venette (FR); GRENOT, Maxime, 60280 Venette (FR)
(74) Representative: Arkema Patent

(57) **Abstract**

The present invention relates to a hot melt adhesive composition comprising:
- at least one block copolymer (P1) comprising :
o a polymer block (A) containing a structural unit derived from an isoprenoid conjugated diene,
o a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- at least one bio-based tackifier resin, and
wherein the hot melt adhesive composition has a glass transition temperature higher than 0°C.

## Description

### TECHNICAL FIELD

The present invention relates to a bio-based hot melt adhesive composition. The present invention also relates to articles made using this hot melt adhesive composition.

### TECHNICAL BACKGROUND

Adhesives are often used to bond substrates together so as to maintain the two substrates in a fixed relation to each other. In the area of industrial adhesives, hot melt adhesives are commonly used to bond together a wide variety of articles including disposable absorbent articles comprising non-woven substrates such as adult incontinence products, disposable diapers, sanitary napkins, bed pads, puppy pads, medical dressings, etc.

There can be multiple hot melt adhesives used in the manufacture of a disposable absorbent article. For example, in the manufacture of a disposable diaper, adhesives are used in construction (for example for bonding the backsheet to the nonwoven and optionally the absorbent pad), elastic attachment (for example for bonding the elastic material to the backsheet in for example the leg or waist area), and for the core stabilization (for example for applying an adhesive to the absorbent core to increase the strength of the core).

Hot melts are generally understood to be room temperature-solid, water and solvent-free adhesives that are applied from the melt onto the parts to be glued together and after assembly physically set by solidifying on cooling.

Conventional hot melt adhesives are petrochemical-based, and rely on energy-intensive processes. In addition, a large percentage of the petroleum is transported from various parts of the world, which increases the carbon footprint. Generally, zero to very few raw materials in hot melt adhesives are made from renewable resources and thus contribution is not enough on the impact of the environment.

There is an increased desire to reduce carbon footprint and to produce environmentally sound products. One method of making an environmentally sound adhesive is to decrease carbon footprint by forming a hot melt adhesive from materials having a high renewable resource content.

However, adhesives made from materials having a high renewable resource content are known to be more unstable to air oxidation compared to petroleum-based adhesives. Therefore, thermal stability is a key parameter for the development of such adhesives.

Besides, adhesives made from renewable materials do not necessarily allow to reach similar or better properties (adhesiveness and cohesion) than conventional petroleum-based adhesives.

There is thus a need for providing environment-friendly hot melt adhesives that allows to resolve at least a part of the above-mentioned drawbacks.

More particularly, there is a need for more environment-friendly hot melt adhesives which exhibit a good adhesion, even at high temperatures, while maintaining good physicochemical properties.

### DESCRIPTION OF THE INVENTION

The present invention concerns a hot melt adhesive composition comprising:
- at least one block copolymer (P1) comprising :
   ∘ a polymer block (A) containing a structural unit derived from an isoprenoid conjugated diene,
   ∘ a non-elastomeric polymer block (B) containing a structural unit derived from an aromatic vinyl compound;
   wherein said block copolymer (P1) has a biocarbon content equal to or higher than 45%, and said block copolymer (P1) is at least partially hydrogenated;
- at least one bio-based tackifier resin, and
wherein the hot melt adhesive composition has a glass transition temperature higher than 0°C.

The carbon of a biomaterial derives from the photosynthesis of plants and therefore from atmospheric CO₂. The degradation (by degradation is also meant combustion/incineration at the end of their life) of these materials into CO₂ does not therefore contribute to warming since there is no increase in the carbon emitted into the atmosphere. The CO₂ balance of biomaterials is therefore clearly improved and contributes to reducing the carbon footprint of the products obtained (only the energy for manufacturing is to be taken into account). On the contrary, a material of fossil origin which also degrades into CO₂ will contribute to an increase in the level of CO₂ and therefore to global warming.

The components of the invention will therefore have a carbon footprint which will be better than that of compounds obtained from a fossil source.

The term *"bio-carbon"* indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 x 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-06) and ASTM D 7026 (ASTM D 7026-04). The ASTM D 6866 standard is *"Determining the Biobased Content of Natural Range Materials Using Radiocarbon and Isotope Ratio Mass Spectrometry Analysis",* while the ASTM D 7026 standard is *"Sampling and Reporting of Results for Determination of Biobased Content of Materials via Carbon Isotope Analysis".* The second standard makes reference in its first paragraph to the first standard.

The first standard describes a test for measuring the ¹⁴C/¹²C ratio of a sample and compares it with the ¹⁴C/¹²C ratio of a reference sample of 100 % renewable origin, to give a relative percentage of C of renewable origin in sample. The standard is based on the same concepts as ¹⁴C dating, but without applying the dating equations.

The ratio thus calculated is referred to as the *"pMC"* (percent Modern Carbon). If the material to be analyzed is a mixture of biomaterial and fossil material (without radioactive isotope), then the pMC value obtained is directly correlated with the quantity of biomaterial present in the sample. The reference value used for the ¹⁴C dating is a value dating from the 1950s. This year was chosen because of the existence of nuclear tests in the atmosphere which introduced large quantities of isotopes into the atmosphere after this date. The 1950 reference corresponds to a pMC value of 100. Taking into account the thermonuclear tests, the current value to be retained is approximately 107.5 (which corresponds to a correction factor of 0.93). The radioactive carbon signature of a current plant is therefore 107.5. A signature of 54 pMC and 99 pMC therefore correspond to an amount of biocarbon in the sample of 50 % and 93 %, respectively.

### Hot melt adhesive composition

*By "hot melt"* is meant that the adhesive composition requires to be heated at least at 120°C, preferably at least at 140°C, to be applied on a substrate. The hot melt adhesive composition is thus solid at 23°C.

### Block copolymer (P1)

First of all, the hot melt adhesive composition comprises at least one block copolymer (P1) comprising :
- a polymer block (A) containing a structural unit derived from an isoprenoid conjugated diene,
- a a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;

The block copolymer (P1) may further comprise a polymer block (C) comprising a structural unit derived from a conjugated diene except isoprenoid conjugated diene as defined herein.

### Block (A)

As used herein, the term "isoprenoid conjugated diene" refers to the group of conjugated diene that have two, three or more isoprene units combined. For example, farnesene (3,7,11-trimethyl-1,3,6,10-dodecatetraene) is a conjugated diene with 3 isoprene units combined, or myrcene which is a conjugated diene with two isoprene units.

The structural unit derived from isoprenoid conjugated diene, may comprise more than 30% by weight, preferably more than 50% by weight, more preferably more than 70% by weight, and further more preferably more than 90% by weight of isoprenoid conjugated diene, based on the total weight of said structural unit.

The isoprenoid conjugated diene may be selected from myrcene, farnesene, and mixtures thereof.

The farnesene may be α-farnesene or β-farnesene, or mixtures thereof. Preferaby the farnesene is β-farnesene.

The isoprenoid conjugated diene may derived from renewable material, such as for example sugar cane.

Preferably, the isoprenoid conjugated diene is farnesene. Preferably, the farnesene is derived from the fermentation of sugar from sugar cane.

The polymer block (A) may further comprise a structural unit derived from a copolymerizable monomer except isoprenoid conjugated dienes as defined herein. The copolymerizable monomer may be an unsaturated hydrocarbon compound such as for example propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene ; a functional group-containing unsaturated compound such as for example acrylic acid, methacrylic acid, methyl acrylate, methyl methacrylate, acrylonitrile, methacrylonitrile, maleic acid, fumaric acid, crotonic acid, itaconic acid, 2-acrylolethane-sulfonic acid, vinylsufonic acid, vinyl acetate, methyl vinyl ether.

The polymer block (A) may comprise more than 60 % by weight, preferably more than 80 % by weight, even more preferably more than 90% by weight of structural units derived from an isoprenoid conjugated diene.

The polymer block (A) may be partially or fully hydrogenated.

### Block (B)

The block copolymer (P1) comprises a non-elastomeric block (B) containing a structural unit derived from an aromatic vinyl compound, also referred herein as "polymer block (B)".

The polymer block (B) may be obtained from aromatic vinyl compounds such as for example styrene, α-methylstyrene, 2-methylstyrene, 3-methylstyrene, 4-methylstyrene, 4-propylstyrene, 4-tbutylstyrene, 4-cyclohexylstyrene, 4-dodecylstyrene, 2,4-dimethylstyrene, 2,4,6-trimethylstyrene, 2-ethyl-4-benzylstyrene, 4-(phenylbutyl)styrene, 1-vinylnaphtalene, 2-vinylnaphtalene, vinylanthracene, divinylstyrene, and mixtures thereof. Preferably, the aromatic vinyl compound is styrene.

The polymer block (B) may further comprise a structural unit derived from a copolymerizable monomer except isoprenoid conjugated dienes as defined herein. The copolymerizable monomer may be an unsaturated hydrocarbon compound such as for example propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene ; a functional group-containing unsaturated compound such as for example acrylic acid, methacrylic acid, methyl acrylate, methyl methacrylate, acrylonitrile, methacrylonitrile, maleic acid, fumaric acid, crotonic acid, itaconic acid, 2-acrylolethane-sulfonic acid, vinylsufonic acid, vinyl acetate, methyl vinyl ether.

The polymer block (B) may comprise more than 80 % by weight, preferably more than 90 % by weight, even more preferably more than 95% by weight of structural units derived from aromatic vinyl compounds.

Preferably, the non-elastomeric block (B) is a polystyrene block.

The polymer block (B) may be partially or fully hydrogenated.

### Block (C)

The block copolymer (P1) may comprise a polymer block (C) comprising a structural unit derived from a conjugated diene except isoprenoid conjugated diene as defined herein.

The conjugated diene except isoprenoid conjugated diene may comprise butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, chloroprene.

Preferably, the conjugated diene is selected from butadiene, isoprene and mixtures thereof.

The polymer block (C) may be partially or fully hydrogenated.

The block copolymer (P1) according the invention may be linear or radial block copolymer. It may be a diblock copolymer, a triblock copolymer, a multiblock copolymer, or any mixtures. The bonding arrangement of the polymer block (A), polymer block (B) and optional polymer block (C) is not specifically limited, and may be linear, branched, radial, or any combination of two or more of them.

The block copolymer (P1) is preferably a multiblock copolymer.

A multiblock copolymer may be a tetra-block copolymer represented for example by [A-B-C-B], a penta-block copolymer represented by [A-B-C-B-A], a poly-block copolymer represented by [A-B-(C-B)ₗ-A], [A-B-(C-B-A)ₘ], or [A-(B-C-B-A]ₙ] (where I, m and n each independently represent an integer or 2 or more).

The styrene content in the block copolymer (P1) may range from 2 to 50 %, preferably from 5 to 40%, more preferably from 8 to 30%, and even more preferably from 10 to 20%.

The block copolymer (P1) is at least partially hydrogenated, which means that it may be partially or fully hydrogenated.

The hydrogenation rate of the total carbon-carbon double bonds in the block copolymer (P1) may range from 50 to 100 mol%, preferably from 70 to 100 mol%.

The hydrogenation rate can be calculated by ¹H-NMR analysis of the block copolymer (P1) before and after hydrogenation.

The block copolymer (P1) has preferably a biocarbon content equal to or higher than 50%, more preferably equal to or higher than 60%, and even more preferably equal to or higher than 70%, further more preferably equal to or higher than 80%. The biocarbon content is determined as mentioned above.

The block copolymer (P1) may have a melt flow rate (MFR) lower than 1000 g/10 min, preferably lower than 500 g/10 min, and more preferably lower than 100 g/ 10 min. The method for measuring the MFR is according to ISO 1133, at 230°C and 10 kg.

The block copolymers may be prepared by anionic polymerization using techniques known in the art. For example, the polymerization may be carried out in presence of a polymerization initiator such organic alkali metal compound, in suitable solvents such as aliphatic, cycloaliphatic or aromatic hydrocarbons. If desired, Lewis base additive can be employed. The polymerization reaction temperature may range from 10 to 90°C.

Then, the hydrogenation step can be done by any known method. For example, the block copolymer may be dissolved in a solvent not having influence on hydrogenation to prepare a solution, and hydrogenated in the presence of a Ziegler catalyst or nickel, platinum, ruthenium or rhodium metal, and in presence of hydrogen.

Useful commercial block copolymers (P1) include Biosepton^{®} SF902 (styrene block copolymer derived from farnesene, biocarbon content = 80%, MFR = 55 g/10 min at 230°C/10kg) and Biosepton^{®} SF904 (styrene block copolymer derived from farnesene, MFR > 700 g/10 min at 230°C/10 kg, biocarbon content = 48%), commercialized by Kuraray.

The hot melt adhesive composition may comprise from 5 to 60 %, preferably from 10 to 50 %, more preferably from 15% to 40% by weight of the at least one block copolymer (P1) (or of the mixture of block copolymers (P1) in case a plurality of block copolymers (P1) are present in the hot melt adhesive composition) relative to the total weight of the composition.

### Tackifier resin

The hot melt adhesive composition further comprises at least one bio-based tackifier resin.

By *"bio-based tackifier resin"* is meant a tackifier resin that derives at least partially from a biomaterial.

The bio-based tackifier resin may have a biocarbon content equal to or higher than 85 %, preferably equal to or higher than 90 %, and more preferably equal to or higher than 93 %.

The bio-based resins may have a biocarbon content of 100 %. Therefore, these resins may have a ¹⁴C/¹²C isotope ratio equal to or higher than 1.02 x 10⁻¹², preferably equal to or higher than 1.08 x 10⁻¹², more preferably equal to or higher than 1.11 x 10⁻¹², or even a ¹⁴C/¹²C isotope ratio of 1.2 x 10⁻¹².

The bio-based tackifier resin may be selected from the group consisting of terpene derivatives, rosin derivatives, and mixtures thereof.

The terpene derivatives include polyterpene homopolymers, copolymers of terpene with a diene monomer (for example styrene, methylstyrene, etc), phenolic-modified terpene resins .

The terpene derivatives include the non-hydrogenated, as well as the partially or fully hydrogenated derivatives. For example, polyterpene homopolymers include the non-hydrogenated polyterpene homopolymers, the partially polyterpene homopolymers and the fully-hydrogenated polyterpene homopolymers.

The rosin derivatives include rosins and rosin esters, preferably from a partly or fully hydrogenated rosin and a partly or fully hydrogenated rosin ester, and more preferably from a fully hydrogenated rosin and a fully hydrogenated rosin ester.

The bio-based tackifier resin may be chosen from the group consisting of:
- natural and modified rosins such as, for example, gum rosins, wood rosins, tall-oil rosins, distilled rosins, (partially of fully) hydrogenated rosins, dimerized rosins and polymerized rosins;
- glycol, glycerol and pentaerythritol esters of natural and modified rosins, such as, for example, the glycerol esters of pale wood rosin, the glycerol esters of (partially of fully) hydrogenated rosin, the glycerol esters of polymerized rosin, the pentaerythritol esters of pale wood rosin, the pentaerythritol esters of (partially of fully) hydrogenated rosin, the pentaerythritol esters of tall oil rosin and the phenolic modified pentaerythritol esters of rosin;
- polyterpene homopolymers which typically may result from the polymerization of one or several terpene hydrocarbons, such as for example the monoterpenes known as pinene, for example in the presence of Friedel-Crafts catalysts;
- copolymers of terpene with a diene monomer (for example styrene, methylstyrene, etc);
- phenolic-modified terpene resins such as, for example those resulting from the condensation, in an acidic medium, of a terpene and a phenol;
- and mixtures thereof.

Preferably, the bio-based tackifier resin is selected from the terpene derivatives, and more particularly from polyterpene homopolymers.

The bio-based tackifier resin may have a Ring and Ball softening point from 70 to 150°C. The softening point may be measured by using the ASTM E28 standard.

As examples of commercially available tackifier resins mention may be made of: unmodified natural tall oil rosins from Arizona Chemical Company sold under the trade names Sylvaros^{®} (85, 90 and NCY), the partially hydrogenated rosin from Eastman sold under the trade name Foralyn^{®} E; the fully hydrogenated rosin from Eastman sold under the trade name Foral^{®} AX-E; the fully hydrogenated rosin from DRT sold under the trade name Foral^{®}DX; the fully hydrogenated rosin ester from DRT sold under the trade name Foral^{®} 105, the dimerized rosin from Eastman sold under the trade name Dymerex^{®}, Sylvalite^{®} RE 100L, a pentaerythritol based tall-oil rosin ester, Sylvalite^{®} RE 85L, a glycerol ester of tall oil rosin, polyterpene tackifiers from Arizona Chemical company sold under the trade names Sylvagum^{®} TR and Sylvares^{®} TR series (7115, 7125, A25L, B115, M1115); the polyterpene from DRT sold under the trade name DERCOLYTE^{®}M105, resulting from the polymerization of α-pinene and β-pinene and having a Ring and Ball softening point of 105°C; the terpene phenol resins from the Arizona Chemical Company sold under the trade names Sylvares^{®} TP (96, 2040, 300, 7042, 2019).

The hot melt adhesive composition may comprise from 20% to 80 %, preferably from 40% to 75%, even more preferably from 50% to 70% by weight of the bio-based tackifier resin (or of the mixture of tackifier resins in case a plurality of tackifier resins are present in the hot melt adhesive composition) relative to the total weight of the composition.

### Plasticizer

The hot melt adhesive composition may further comprise at least one plasticizer.

Preferably, the plasticizer may have a bio-carbon content equal to or higher than 80%, more preferably equal to or higher than 85%, and even more preferably equal to or higher than 90%.

Therefore, the plasticizer may have a ¹⁴C/¹²C isotope ratio equal to or higher than 0.96 x 10⁻¹², preferably equal to or higher than 1.02 x 10⁻¹², more preferably equal to or higher than 1.08 x 10⁻¹², more preferably equal to or higher than 1.14 x 10⁻¹², or even a ¹⁴C/¹²C isotope ratio equal to 1.2 x 10⁻¹².

The plasticizer may be chosen from an esterified fatty acid, a stand oil of a vegetable oil, diene homopolymers, and mixtures thereof, preferably from an esterified fatty acid, a stand oil of vegetable oil, and mixtures thereof.

The diene homopolymers are preferably liquid at 23°C and selected from polybutadiene, polyfarnesene, and mixtures thereof.

In case the plasticizer is an esterified fatty acid, the fatty acid may comprise from 6 to 30 carbon atoms, preferably from 10 to 22 carbon atoms, more preferably from 14 to 22 carbon atoms and even more preferably from 16 to 18 carbon atoms.

The fatty acid may be derived from a vegetable oil such as castor oil, sunflower oil, coconut oil, corn oil, canola oil, olive oil, palm oil, cottonseed oil, rapeseed oil, safflower oil, soybean oil, sesame oil, olive oil, almond oil, avocado oil, hemp oil, and linseed oil.

A vegetable oil is a composition comprising triple esters of fatty acids and of glycerol (also called *"triglycerides"*)*.*

The expression *"fatty acids derived from vegetable oil"* is thus intended to designate the fatty acids present in the molecular structure of these triglycerides. Said fatty acids can be obtained, in the form of isolated compounds, by saponification, hydrolysis or methanolysis of said triglycerides.

The fatty acid may thus be chosen from myristic acid, palmitic acid, stearic acid, oleic acid, linoleic acid, and ricinoleic acid.

The fatty acid may be a hydrogenated or non-hydrogenated fatty acid.

The esterified fatty acid may result from the transesterification reaction between a mono-alcohol and the triglyceride. In this case, the mono-alcohol may notably be chosen from methanol, ethanol, propanol, isopropanol, butanol, and 2-ethylhexanol.

The alcohol may derive from a biomaterial which makes it thus possible to increase the biocarbon content of the plasticizer and thus of the composition.

An example of an esterified fatty acid resulting from the transesterification reaction between a mono-alcohol and the triglyceride may be the commercially available RADIA 7916 commercialized by OLEON.

The esterified fatty acid may also result from a transesterification reaction between a polyol and the triglyceride. In this case, the polyol may be chosen from glycerol and pentaerythritol.

An example of an esterified fatty acid resulting from a transesterification reaction between a polyol and the triglyceride may be the commercially available RADIA 7176 (Pentaerythritol Tetrastearate) commercialized by OLEON.

By *"stand oil"* is meant a polymerized vegetable oil.

The stand oil is obtained by heating said vegetable oil in the absence of oxygen and at a temperature higher than 200°C, preferably higher than 270°C and even more preferably at a temperature from 270 to 360°C.

It is generally accepted that this heating causes a thermal polymerization reaction of the oil, which involves in particular the polymerization of the double bonds and the crosslinking of the corresponding triglycerides, which has the effect of increasing the viscosity of said oil. This reaction is often referred to as a *"standolization reaction".*

The heating of the vegetable oil is maintained for a time sufficient to obtain a Brookfield viscosity, measured at 20°C, greater than or equal to 50 mPa.s, preferably greater than or equal to 100 mPa.s.

The stand oil may be a stand oil of a vegetable oil whose fatty acids contain 6 to 30 carbon atoms.

Preferably, the stand oil is a stand oil of a vegetable oil whose derived fatty acids comprise a proportion of at least 75 % of fatty acids comprising from 16 to 22 carbon atoms, said proportion being expressed as a percentage in weight based on the total weight of fatty acids derived from said oil.

Preferably, the proportion of fatty acids comprising from 16 to 22 carbon atoms may be at least 80 % by weight, and even more preferably at least 85 % by weight, relative to the total weight of the fatty acids derived from vegetable oil.

The stand oil may be chosen from stand oil obtained from sunflower oil, rapeseed oil, linseed oil and soybean oil.

Stand oils are commercially available, and we can cite for example the following products available from the company Vandeputte:
- as soybean stand oil, Veopol^{®} 315002 whose Brookfield viscosity at 20°C is 267 mPa.s and Veopol^{®} 215035 whose Brookfield viscosity at 20°C is 4420 mPa.s;
- as flax stand oil, Veopol^{®} 212055 whose Brookfield viscosity at 20°C is of 5870 mPa.s.

The adhesive composition of the present invention may comprise from 0% to 30 %, preferably from 1% to 25 %, and more preferably from 5% to 20% by weight of the at least one plasticizer (or of the mixture of plasticizers) relative to the total weight of the composition.

### Additives

The hot melt adhesive composition of the invention may optionally include one or several additives. Such additives may include waxes, antioxidants, pigments, brightening agents, colorants, fluorescing agents, dyestuffs, fillers, flow and leveling agents, wetting agents, surfactants, antifoaming agents, rheology modifiers, emulsifiers, humectants, gelling agent, colorants, other surface modifying agents, fragrances, and permeation enhancers. Preferably, the additives are also bio-based. Additives may be incorporated in minor amounts, for example up to about 10 %, preferably up to 5 %, by weight, into the hot melt adhesive composition of the present invention.

Useful antioxidants may include for example, pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof.

Useful antioxidants are commercially available under a variety of trade names including, e.g., the IRGANOX series of trade names including IRGANOX 1010, IRGANOX 565, and IRGANOX 1076 hindered phenolic antioxidants and IRGAFOS 168 phosphite antioxidant, all of which are available from BASF Corporation, and ETHYL 702 4,4'-methylene bis(2,6-di-tert-butylphenol).

### Hot melt adhesive

The hot melt adhesive composition according to the invention preferably comprises:
- from 5 to 60 %, preferably from 10 to 50 %, more preferably from 15% to 40% by weight of at least one block copolymer (P1) (relative to the total weight of the composition) comprising :
   ∘ a polymer block (A) containing a structural unit derived from an isoprenoid conjugated diene,
   ∘ a non-elastomeric polymer block (B) containing a structural unit derived from an aromatic vinyl compound;
   wherein said block copolymer (P1) has a biocarbon content equal to or higher than 45%, and said block copolymer (P1) is at least partially hydrogenated;
- from 20% to 80 %, preferably from 40% to 75%, even more preferably from 50% to 70% by weight of at least one bio-based tackifier resin relative to the total weight of the composition;
- from 0% to 30 %, preferably from 1% to 25 %, and more preferably from 5% to 20% by weight of at least one plasticizer relative to the total weight of the composition;
wherein the hot melt adhesive composition has a glass transition temperature higher than 0°C.

The biocarbon content of the hot melt adhesive may be greater than or equal to 80 %, preferably greater than or equal to 85 %, and more preferably greater than or equal to 90 %.

The hot melt adhesive composition has a glass transition temperature higher than 0°C. The glass transition temperature may be higher or equal to 2°C, preferably higher or equal to 5°C, and even more preferably higher or equal to 10°C.

The hot melt adhesive composition may have a glass transition temperature higher than 0°C and below or equal to 20°C, preferably higher than 0°C and below or equal to 15°C.

The glass transition temperature is measured by dynamic mechanical analysis (DMA).

In addition, the hot melt adhesive composition may have a viscosity at 149°C ranging from 200 to 15 000 mPa.s, preferably ranging from 300 to 13 000 mPa.s. This viscosity is measured by using the ASTM method D-3236.

The hot melt adhesive composition of the present invention advantageously exhibits an average peel strength higher than 1.7 N/25 mm, preferably higher than 2.0 N/inch with an adhesive coating weight of 5 g/m². The average peel strength is measured according to the method entitled "Peel measured initially at 23 °C" described below.

The hot melt adhesive composition advantageously exhibits good adhesive properties, even at high temperature after aging, while being more environment-friendly.

The hot melt adhesive composition advantageously exhibits a good adhesion, being environment-friendly while maintaining good physical properties.

The composition of the present invention may be prepared by mixing the styrene block copolymer (P1) with the bio-based tackifier resin, the optional plasticizer and any other additional compounds and then heating this mixture at a temperature from 100 to 180 °C and for a duration from 1 to 8 hours.

Alternatively, the composition of the present invention may be prepared by heating a mixture formed from the styrene block copolymer (P1), the optional plasticizer and any other additional compounds at a temperature from 100 to 180 °C and for a duration from 1 to 8 hours and then adding the tackifier resin.

The composition may then be cooled at a temperature from 20 to 30°C, and preferably at a temperature around 23°C (ambient temperature).

The hot melt adhesive is preferably not a hot melt pressure-sensitive adhesive.

### Use

The invention also relates to the use of the hot-melt adhesive composition as described above, for bonding two substrates.

In this case, the process of manufacturing an assembly product (or laminate) may comprise:
- a step (i) of heating the hot-melt adhesive composition according to the invention, *e.g*. at a temperature ranging from 110°C to 180°C, for at least a period of time long enough to render the hot melt adhesive composition liquid enough to be applied on a substrate (for example at least two hours), then
- a step (ii) of coating said composition on a first substrate, then
- a step (iii) of putting into contact the coated surface of the first substrate with the surface of a second substrate, so as to form an adhesive joint bonding the two substrates.

The substrates may be different or of same nature, with various forms (layer or film, strands, fluff).

Preferably, each substrate may be chosen independently from one another among films (such as polyolefin films (polyethylene and/or polypropylene films)), release liners, porous substrates, cellulose substrates, sheets (such as paper, and fiber sheets), paper products, woven and nonwoven webs, fibers (such as synthetic polymer fibers such as nylon, rayon, polyesters, acrylics, polypropylenes, polyethylene, polyvinyl chloride, polyurethane, and natural cellulose fibers such as wood pulp, cotton, silk and wool), glass and tape backings.

The composition according to the invention may be coated or applied with a variety of application techniques known in the art, which include contact type application (such as slot die coating) and non-contact type application (such as spraying or fiberization).

Therefore, the hot melt adhesive composition may be used in a variety of applications and constructions including disposable absorbent articles such as disposable diapers, adult incontinence products, sanitary napkins, medical dressings (such as wound care products) bandages, surgical pads, pet training pads (such as puppy pads) and meat-packing products and components of absorbent articles including an absorbent element, absorbent cores, impermeable layers (such as backsheets), tissue (such as wrapping tissue), acquisition layers and woven and nonwoven web layers (such as top sheets, absorbent tissue) and elastics.

The hot melt adhesive composition is preferably used as a construction adhesive in a disposable absorbent article.

In a typical application for the manufacture of a disposable absorbent article, a body fluid impermeable backsheet may be bonded to a nonwoven substrate. The adhesive composition of the present invention may also be used to bond at least one additional layer or material selected from the group consisting of absorbents, tissues, elastomeric materials, superabsorbent polymers, and combinations thereof. The body fluid impermeable backsheet is typically a polyolefin film (such as polyethylene, polypropylene, ethylene vinyl acetate, ethylene copolymer).

The hot melt adhesive composition can be used to contain and/or provide strength to the absorbent core of a disposable absorbent article (such as as a core stabilization adhesive). The absorbent core can include many different materials including natural cellulose fibers (such as wood pulp, fibers, cotton, fluff) and superabsorbent polymers (such as polyacrylates).

The present invention also relates to an article comprising the hot melt adhesive composition as defined above. The article may be a disposable absorbent article.

The ranges disclosed in this description include both the lower and the upper limit thereof. For example, the expressions "ranging from x to y" or "between x and y" comprises the limits x and y.

### Examples

The following examples illustrate the invention without limiting it.

### Description of raw materials:

The materials used were the following:
- Hyprene L500: a hydrotreated naphthenic process oil commercialized by Ergon;
- Pionier^{®} TP130S: a hydrogenated esterified soybean oil commercialized by H&R and having a viscosity of 900 mPa.s at 25°C, an acidic number of 0.21 mg KOH/g and a renewable carbon content of 100%;
- RADIA 7916: methyl palmitate plasticizer commercialized by OLEON having a viscosity of 35 mPa.s at 25°C and a renewable carbon content of 93%;
- Escorez 5400: a hydrogenated dicyclopentadiene resin commercialized by Exxon and having a renewable carbon content of 0%;
- Dercolyte^{®} M105: a polyterpene resin commercialized by DRT resulting from the polymerization of α-pinene and β-pinene and having a Ring and Ball softening point of 105°C;
- Sylvalite 9000: a tall oil rosin ester commercialized by KRATON having a Ring and Ball softening point around 105°C and a renewable carbon content of 97%;
- Irganox 1010: a phenolic type antioxidant commercialized by BASF;
- BIOSEPTON^{®} SF-902 (from KURARAY) is a linear and hydrogenated HSFC (Hydrogenated Styrene Farnesene Copolymer), having 18% of styrene as styrene block, biocarbon content is 80%;
- SINOPEC^{®} YH-1209 (from SINOPEC) is a linear SIS having 30% styrene and less than 1% diblock;
- SINOPEC^{®} YH-1126 (from SINOPEC) is a linear SIS copolymer having 16% styrene and 50% diblock content.

### Brookfield viscosity:

The Brookfield viscosity was measured according to the standard method ASTM D-3236, using a Brookfield viscometer of the type Spindle 27, at a temperature of about 163°C.

### Dynamical Mechanical Analysis (DMA) - Temperature Sweep

A rheometer applied a shear stress to an adhesive and measured the resulting strain (shear deformation) response at constant temperature.

Equipment: MCR 301 Rheometer by Anton Paars, which applied a small oscillatory stress to achieve a constant oscillatory strain within the linear viscoelastic region of the adhesive (*e.g*. 1%).

Temperature-dependent parameters:
- Storage Modulus
- Loss Modulus
- Loss Factor

General protocol: The adhesive was placed between a Peltier plate acting as lower, fixed plate and an upper plate with a radius R of 10 mm, which was connected to the drive shaft of a motor to generate the shear stress. The gap between both plates has a height H of 1,500 µm. The Peltier plate controls the temperature of the material (+/-0.5°C).

Test execution:
- After GAP 0 at 80°C, setting the temperature to the start temperature (*i.e.* 150°C);
- placing the adhesive (1 cm³) on the Peltier plate;
- lowering the upper plate to a gap of 1,700 µm till its contacts the adhesive;
- removing excessive material and setting the temperature to 120°C;
- lowering the upper plate to a gap of 1,500 µm;
- setting the temperature to the start temperature of 120°C, the constant measurement strain to 1%, the constant oscillation frequency to 1 Hz and the cooling rate to 6°C/min (from 120°C to -10°C);
- after completing the test, melting the adhesive, lifting the upper plate and removing the adhesive from both the Peltier plate and the upper plate; and
- setting the temperature back to room temperature.

Result: Tx was measured by measuring the crossover temperature between storage modulus and loss modulus for temperature higher than 50 °C. Tg was measured by measuring the temperature at the maximum of loss factor for temperature lower than 50 °C.

### Example 1

The compositions of example 1 in Table 1 are prepared by simple mixing of its ingredients. Polymer(s), plasticizer(s) and stabilizer(s) are mixed together and heated at 145°C until everything dissolved as a homogeneous mixture. Then, resin(s) are added at the same temperature until everything dissolved as a homogeneous mixture. At the end, the mixture is cooled down and collect to be used as it.

Compositions A, B and C in the table below are compositions according to the invention while composition D is a comparative composition.

**Table 1 : compositions**

| | A | B | C | D (comparative) |
|---|---|---|---|---|
| Hyprene L500 (%) | - | - | - | 22.0 |
| Pionier TP130S (%) | - | 15.4 | - | - |
| RADIA 7916 (%) | 12.0 | - | 12.0 | - |
| Escorez 5400 (%) | - | - | - | 56.0 |
| Dercolyte M105 (%) | 29.0 | 58.0 | 30.0 | - |
| Sylvalite 9000 (%) | 35.0 | | 37.0 | |
| Sinopec 1209 (%) | - | - | - | 14.5 |
| Sinopec YH-1126 (%) | - | - | 3.0 | 6.0 |
| Biosepton SF-902 | 23.0 | 25.6 | 17.0 | - |
| Irganox 1010 (%) | 1 | 1 | 1 | 1 |
| Tg (°C) | 12.2 | 10.0 | 14.7 | 5.0 |

### Example 2 : Preparation of a laminate by means of a slot nozzle coating equipment

A laminate was prepared as follows : Use is made, as a laminating device, of a machine operating continuously at a line speed of approximately 200 m/minute, which machine is sold by NORDSON under the name of Coater CTL 4400.

In this machine, the coating nozzle is a slot nozzle, NORDSON SlotTM.

The two substrates employed are:
- a 20 g/m² PE film breathable which has a width of 20 cm, and
- a 15 g/m² spunbond hydrophile nonwoven sheet of the same width, which is composed of fibers of polypropylene (PP).

These two substrates are packaged as a roll with a width of 20 cm.

The compositions of table 1 were heated in the melting pot at a temperature of 150°C.

It was then coated at the same temperature of 150°C and at a coating weight of approximately 5 g/m2 on the PE film.

The resulting coating pattern is quite adequate and is typical of a good processability. The nonwoven (PP) sheet was then put into contact with the coated surface of the PE film by means of a nip roll applying a pressure of 1 bar.

### Example 3 : performances

The laminates obtained in example 2 were then packaged as a roll and left for 24 hours at ambient temperature (23°C) and at 50% relative humidity.

A rectangular strip measuring 2.54 cm by approximately 10 cm was then cut out in the coated central area of the laminate.

The two individual substrates were separated, starting from one end of the above rectangular strip (as a test specimen) and over approximately 2 cm.

The two free ends thus obtained were fixed to two clamping devices respectively connected to a stationary part and a movable part of a tensile testing device which are located on a vertical axis.

While a drive mechanism communicates, to the movable part, a uniform speed of 300 mm/minute, resulting in the separation of the two substrates, the separated ends of which are gradually displaced along a vertical axis while forming an angle of 180°, the stationary part, connected to a dynamometer, measures the force withstood by the test specimen thus held.

The result corresponding to the peel after 24 hours at 23°C, is expressed in N/25 mm. The peel after, respectively, 2 weeks at 55°C, is measured by repeating the above protocol except that the assembly obtained after lamination is aged during the respective time at 55°C, then measured at 23°C after 24h at 23°C, is expressed in N/25 mm.

The results are reported in Table 2 below.

**Table 2 : properties**

| | A | B | C | D (comparative) |
|---|---|---|---|---|
| Biocarbon content (%) | 93 | 94 | 91 | 0 |
| Viscosity at 149°C (mPa.s) | 2,178 | 540 | 1,448 | 2 500 |
| Initial Peel (N/25 mm) | 2.8 | 2.6 | 2.5 | 2.7 |
| Peel after aging @55°C (N/25 mm) | 2.6 | 2.5 | 2.5 | 1.2 |

From the above results, it is clear that the present invention makes it possible to achieve at the same time compositions that have a high biocarbon content and good peel performances (compositions A, B and C), especially good peel performances after ageing at 55°C. Regarding the comparative composition composition D shows good initial peel value (2.7 N/25 mm) but has a 0% biocarbon content, and it exhibits lower peel after ageing than compositions A, B and C (1.2 versus 2.5 or 2.6).

## Claims

1. Hot melt adhesive composition comprising:
- at least one block copolymer (P1) comprising :
∘ a polymer block (A) containing a structural unit derived from an isoprenoid conjugated diene,
∘ a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- at least one bio-based tackifier resin, and
wherein the hot melt adhesive composition has a glass transition temperature higher than 0°C.

2. Hot melt adhesive composition according to claim 1, wherein the block copolymer (P1) further comprises a polymer block (C) comprising a structural unit derived from a conjugated diene except isoprenoid conjugated diene.

3. Hot melt adhesive composition according to any one of claims 1 or 2, wherein the isoprenoid conjugated diene is selected from myrcene, farnesene, and mixtures thereof, preferably the isoprenoid conjugated diene is farnesene.

4. Hot melt adhesive composition according to any one of claims 1 to 3, wherein the isoprenoid conjugated diene is derived from renewable material.

5. Hot melt adhesive composition according to any one of claims 1 to 4, wherein the polymer block (B) is obtained from aromatic vinyl compounds selected from styrene, α-methylstyrene, 2-methylstyrene, 3-methylstyrene, 4-methylstyrene, 4-propylstyrene, 4-tbutylstyrene, 4-cyclohexylstyrene, 4-dodecylstyrene, 2,4-dimethylstyrene, 2,4,6-trimethylstyrene, 2-ethyl-4-benzylstyrene, 4-(phenylbutyl)styrene, 1-vinylnaphtalene, 2-vinylnaphtalene, vinylanthracene, divinylstyrene, and mixtures thereof.

6. Hot melt adhesive composition according to any one of claims 1 to 5, wherein the polymer block (B) is obtained from styrene.

7. Hot melt adhesive composition according to any one of claims 1 to 6, wherein the styrene content in the block copolymer (P1) ranges from 2 to 50 %, preferably from 5 to 40%, more preferably from 8 to 30%, and even more preferably from 10 to 20%.

8. Hot melt adhesive composition according to any one of claims 1 to 7, wherein the block copolymer (P1) has a biocarbon content equal to or higher than 50%, more preferably equal to or higher than 60%, and even more preferably equal to or higher than 70%, further more preferably equal to or higher than 80%.

9. Hot melt adhesive composition according to any one of claims 1 to 8, wherein the block copolymer (P1) has a melt flow rate (MFR) lower than 1000 g/10 min, preferably lower than 500 g/10 min, and more preferably lower than 100 g/ 10 min.

10. Hot melt adhesive composition according to any one of claims 1 to 9, wherein the bio-based tackifier resin is selected from the group consisting of terpene derivatives, rosin derivatives, and mixtures thereof; preferably the bio-based tackifier resin is selected from terpene derivatives, and even more preferably from polyterpene homopolymers.

11. Hot melt adhesive composition according to any one of claims 1 to 10, **characterized in that** it further comprises at least one plasticizer, preferably chosen from an esterified fatty acid, a stand oil of a vegetable oil, diene homopolymers, and mixtures thereof.

12. Hot melt adhesive composition according to any one of claims 1 to 11, wherein its biocarbon content is than or equal to 80 %, preferably greater than or equal to 85 %, and more preferably greater than or equal to 90 %.

13. Hot melt adhesive composition according to any one of claims 1 to 12, having a glass transition temperature higher or equal to 2°C, preferably higher or equal to 5°C, and even more preferably higher or equal to 10°C.

14. Hot melt adhesive composition according to any one of claims 1 to 13, **characterized in that** it comprises:
- from 5 to 60 %, preferably from 10 to 50 %, more preferably from 15% to 40% by weight of at least one block copolymer (P1) (relative to the total weight of the composition) comprising :
∘ a polymer block (A) containing a structural unit derived from an isoprenoid conjugated diene,
∘ a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- from 20% to 80 %, preferably from 40% to 75%, even more preferably from 50% to 70% by weight of at least one bio-based tackifier resin relative to the total weight of the composition;
- from 0% to 30 %, preferably from 1 % to 25 %, and more preferably from 5% to 20% by weight of at least one plasticizer relative to the total weight of the composition;
wherein the hot melt adhesive composition has a glass transition temperature higher than 0°C.

15. Use of a hot-melt adhesive composition as defined according to anyone of claims 1 to 14, for bonding two substrates.

16. Article comprising the hot melt adhesive composition according to any one of claims 1 to 14.

17. Article according to claim 16, which is a disposable absorbent article.
